# EUROPÄISCHE PATENTSCHRIFT

(11) **EP 3 022 745 B1**
(45) Veröffentlichungstag und Bekanntmachung des Hinweises auf die Patenterteilung: **19.02.2020**
(21) Anmeldenummer: 14734775.1
(22) Anmeldetag: 24.06.2014
(51) Int. Cl.: H01F 27/02, H01F 27/40, F16K 17/14, H01H 9/00, H01H 33/55

(54) **BERSTEINRICHTUNG FÜR EIN HOCHSPANNUNGSGERÄT**
BURST ARRANGEMENT FOR A HIGH VOLTAGE DEVICE
DISPOSITIF DE RUPTURE POUR UN DISPOSITIF HAUTE TENSION

(30) Priorität: 16.07.2013 DE 102013107559
(43) Veröffentlichungstag der Anmeldung: 25.05.2016
(73) Patentinhaber: Maschinenfabrik Reinhausen GmbH, 93059 Regensburg (DE)
(72) Erfinder: BÖGER, Christian, 93049 Regensburg (DE); SCHLEPP, Klaus, 93142 Maxhütte-Birkenhöhe (DE); ROY, Dara, 93055 Regensburg (DE); NIESNER, Jürgen, 93138 Lappersdorf (DE)
(86) Internationale Anmeldenummer: PCT/EP2014/063263
(87) Internationale Veröffentlichungsnummer: WO 2015/007478

(56) Entgegenhaltungen:
- EP-A1- 0 120 380
- DD-A1- 229 764
- DE-A1- 3 110 951
- DE-A1- 4 410 651
- DE-U- 1 721 316
- DE-U- 7 330 530
- DE-U1- 20 016 065
- FR-A1- 2 910 584
- KR-B1- 101 229 732
- BON MARDION G ET AL: "A magnetic safety valve", CRYOGENICS, ELSEVIER, KIDLINGTON, GB, Bd. 19, Nr. 7, 1. Juli 1979 (1979-07-01), Seite 425, XP024048421, ISSN: 0011-2275, DOI: 10.1016/0011-2275(79)90130-9 [gefunden am 1979-07-01]

## Beschreibung

Die Erfindung betrifft eine Bersteinrichtung für ein Hochspannungsgerät. Insbesondere weist die Bersteinrichtung zumindest eine Abdeckung auf, die eine in einer Wand des Hochspannungsgerätes ausgebildete Öffnung, die einen umlaufenden Rand besitzt, verschließt. Die Bersteinrichtung ist für Laststufenschalter oder Hochspannungstransformatoren geeignet, die mit einem Füllmedium wie Gas oder Öl gefüllt sind.

Hochspannungsgeräte wie beispielsweise Hochspannungstransformatoren werden auf Grund der hohen Ströme und Spannungen während des Betriebes sehr heiß. Aus diesem Grund sind die Transformatorwicklungen in einem sogenannten Kessel angeordnet. Dieser Kessel ist luftdicht verschlossen und mit einem Transformatoröl gefüllt. Durch einen Kühlkreislauf wird das Transformatoröl dazu verwendet, die Betriebstemperatur niedrig zu halten. Während des Betriebes kann es jedoch durch beispielsweise Wicklungskurzschlüsse dazu kommen, dass sich das Transformatoröl extrem schnell erwärmt und sich dadurch ausdehnt. Das Ausdehnen des Transformatoröls kann dazu führen, dass der Kessel dem Druck nicht Stand hält, unkontrolliert bricht und Teile des Kessels herum geschleudert werden. Um einen derartigen Druckanstieg gezielt kompensieren zu können, werden vordefinierte Bruchstellen in Form von Berstscheiben in den Kessel, also das Gehäuse des Hochspannungstransformators, eingebracht.

Aus der DE 17 21 316 U ist ein gegen Druckwellen gesichertes, mit Isolierflüssigkeit und/oder Gas gefülltes Hochspannungsgerät bekannt. Dieses Hochspannungsgerät weist eine Öffnung auf, die mittels einer Berstscheibe verschlossen ist. Die Berstscheibe besteht aus Hartpapier, das auf der Innenseite von einer Metallfolie bedeckt wird. Die Hartpapierscheibe sowie die Metallfolie sind über einen Ring an die Gehäusewand des Hochspannungsgeräts geschraubt. Die Hartpapierscheibe ist gegen die Gehäusewand und den Ring mit jeweils einem Gummidichtring abgedichtet.

Besonders nachteilig bei dieser Berstscheibe ist deren konstruktiver Aufbau und das verwendete Material. Um den aus Hartpapier bestehenden Teil vor dem aggressiven Öl zu schützen, ist es zwingend notwendig, eine Metallfolie zu verwenden. Bei der Montage kann es jedoch leicht passieren, dass die Metallfolie verrutscht, dass aggressive Öl an die Hartpapierscheibe dringt und das Hochspannungsgerät nicht mehr richtig abgedichtet wird. Ein weiterer Nachteil besteht darin, dass die Hartpapierscheibe sehr empfindlich ist. Bei Wartungsarbeiten kann es passieren, dass ein Monteur unbeabsichtigt auf die Membran tritt und diese zerstört. Ein weiteres Problem bei der Hartpapierlösung ist deren Langlebigkeit. Durch äußere Einflüsse kann das Material ermüden und schon bei geringem Druckanstieg brechen. Eine solche Fehlauslösung ist mit hohem Wartungsaufwand verbunden und somit unerwünscht. Da die Hartpapierscheibe über die gesamte Fläche homogen ausgebildet ist, ist es nicht vorhersehbar, wie diese bei einem plötzlichen Druckanstieg brechen würde.

Aus der DE 20 016 065 U1 ist ein Spannungswandler mit einer umschließenden Hülle als Schutzvorrichtung bekannt. Auf der Oberseite der Hülle ist eine Überdrucksicherung angeordnet. Die Überdrucksicherung ist als Bersteinrichtung mit einer Öffnung, die durch eine Berstfolie verschlossen ist, ausgebildet. Beim Erreichen eines bestimmten Druckes im Spannungswandler reißt die Berstfolie auf.

Auch bei dieser Bersteinrichtung ist das verwendete Material als Schwachstelle zu sehen. Da die Folie der Witterung ausgesetzt wird, kann es im Laufe der Zeit zu Materialermüdung kommen. So ist es auch hier möglich, dass die Folie bei deutlich geringerem Druck als ursprünglich definiert reißt und es zu einer ungewollten Fehlauslösung kommt. Weiterhin kann es auch hier bei Wartungsarbeiten durch Unachtsamkeit zur Zerstörung der Berstfolie kommen, da diese gegen Krafteinwirkung nicht geschützt ist.

EP 0 120 380 offenbart eine Sicherheitseinrichtung gegen unzulässigen Druck in einem Behälter, bei der ein schneidbares, in der Art einer Membrane ausgebildetes Verschlußelement vorgesehen, das eine Druckentlastungsöffnung einer Behälterwand hermetisch abschließt. Dem Verschlußelement ist eine Schneideinrichtung zugeordnet, die in einer Ausgangslage von einem starren Halteglied gehalten ist, das unter dem Innendruck des Behälters steht und eine Sollbruchstelle aufweist.

Das Halteglied ist starr mit der Schneideinrichtung verbunden, die ihrerseits starr mit einer Platte verbunden ist. Das Verschlußelement dagegen ist, ausschließlich eines freien Randes für den Angriff der Schneideinrichtung, zwischen der Platte und einer weiteren Platte eingespannt, die auf der dem Innendruck des Behälters entgegengesetzten Seite des Verschlußelementes angeordnet ist. FR 2 910 584, DE 31 10 951 und DE 73 30 530 U offenbaren ein Hochspannungsgerät mit einem Deckel/ Dach und einem Bolzen bzw. Schrauben als Überdrucksicherung, bei bestimmem Überdruck brechen bzw. durchreißen.

Aufgabe der Erfindung ist daher, eine Bersteinrichtung bereitzustellen, die kostengünstig, servicefreundlich, langlebig, gegen Witterungseinflüsse von außen unempfindlich, einfach montierbar und austauschbar ist und im Störfall zuverlässig auslöst.

Diese Aufgabe wird durch eine Bersteinrichtung mit den Merkmalen des Anspruchs 1 gelöst.

In einer Ausführungsform ist jedem Aufnahmeblock je ein Abstützblock zugeordnet, der über ein Fangelement am umlaufenden Rand der Öffnung befestigt ist. Dabei sitzt der zweite Abschnitt des Scherstifts im Abstützblock beziehungsweise ragt in ihn hinein.

In einer weiteren Ausführungsform ist mindestens ein Sicherungselement mit der Innenfläche des Berstkorkens und mit dem umlaufenden Rand der Öffnung verbunden.

In einer weiteren Ausführungsform tragen der Flanschabschnitt des Berstkorkens und eine in Richtung einer Achse der Öffnung ausgerichtete Wand des Hochspannungsgerätes je eine Dichtung, die mit dem umlaufenden Ansatz der Öffnung dichtend zusammenwirkt. Zwischen dem Flanschabschnitt des Berstkorkens und der Wand des Hochspannungsgerätes kann eine Druckfeder in Richtung der Achse der Öffnung angeordnet sein.

Der Scherstift weist bevorzugt eine Sollbruchstelle zwischen dem ersten Abschnitt und dem zweiten Abschnitt auf. Die Innenfläche des Berstkorkens hat drei Aufnahmeblöcke. Dabei ist jedem Aufnahmeblock ein Abstützblock zugeordnet, so dass je ein Scherstift in den Aufnahmeblock und den Abstützblock ragt.

In einer weiteren Ausführungsform sind zwei Sicherungselemente mit der Innenfläche des Berstkorkens und mit dem umlaufenden Rand der Öffnung verbunden.

Der Berstkorken und der mindestens eine Aufnahmeblock sind bevorzugt einteilig ausgebildet.

Die Bersteinrichtung ist zur Verwendung in einem Hochspannungsgerät, insbesondere einem Laststufenschalter oder einem Hochspannungstransformator geeignet.

Nachfolgend sind die Erfindung und ihre Vorteile unter Bezugnahme auf die beigefügten Zeichnungen ausführlicher beschrieben. Es zeigen:
- Fig. 1: die Anordnung einer Ausführungsform der erfindungsgemäßen Bersteinrichtung an einem Hochspannungsgerät;
- Fig. 2: eine Schnittdarstellung der Bersteinrichtung entlang der Linie B-B aus Fig.1;
- Fig. 3: eine vergrößerte Darstellung des in Fig. 2 mit D gekennzeichneten Bereichs;
- Fig. 4: eine Schnittdarstellung einer anderen Ausführungsform der erfindungsgemäßen Bersteinrichtung entlang der Linie B-B aus Fig. 1;
- Fig. 5: eine vergrößerte Darstellung des in Fig. 4 mit E gekennzeichneten Bereichs;
- Fig. 6: eine Perspektivansicht einer Ausführungsform der erfindungsgemäßen Bersteinrichtung von unten, wobei die Bersteinrichtung in einer Wand des Hochspannungsgeräts integriert ist;
- Fig. 7: eine perspektivische Detailansicht der Bersteinrichtung aus Fig. 6; und
- Fig. 8: eine perspektivische Detailansicht von oben einer weiteren Ausführungsform der erfindungsgemäßen Bersteinrichtung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Bersteinrichtung ausgebildet sein kann und stellen somit keine abschließende Begrenzung der Erfindung dar.

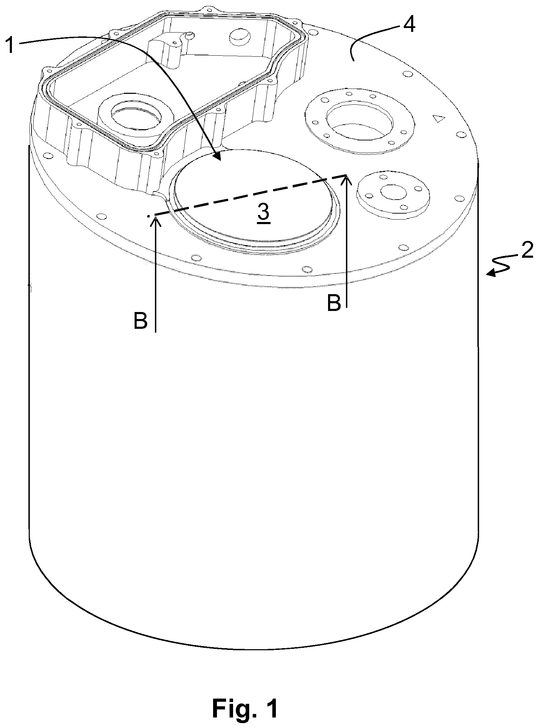

Fig. 1 zeigt ein Hochspannungsgerät 2, das in einer Wand 4 beziehungsweise einem Wandteil eine Ausführungsform der erfindungsgemäßen Bersteinrichtung 1 eingebaut hat. Die Bersteinrichtung 1 umfasst als Abdeckung zumindest einen Berstkorken 3, mit dem das Hochspannungsgerät 2 nach außen hin verschlossen ist. Das Hochspannungsgerät 2 kann beispielsweise ein Laststufenschalter sein. Die Bersteinrichtung 1 kann jedoch auch an einem beliebigen Hochspannungsgerät 2, wie beispielsweise einem Hochspannungstransformator, welcher mit einem Füllmedium, beispielsweise Öl oder Gas, befüllt ist, angebracht werden. Bei der hier gezeigten Ausführungsform ist die Wand 4 ein Deckel eines Lastumschalters und die Bersteinrichtung 1 ist im Deckel 4 vorgesehen.

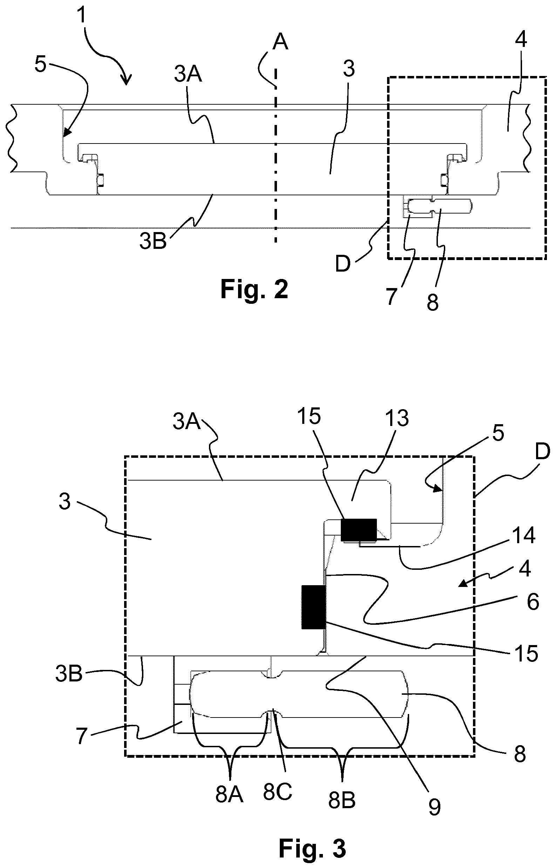

Fig. 2 zeigt eine Schnittansicht der Bersteinrichtung 1 entlang der Linie B-B aus Fig. 1. Die Bersteinrichtung 1 umfasst als Abdeckung zumindest den Berstkorken 3, der in einer Öffnung 5 einer Wand 4 des Hochspannungsgerätes 2 angeordnet ist. Der Berstkorken 3 weist eine Außenfläche 3A auf, die mit der äußeren Umgebung des Hochspannungsgerätes 2 in Verbindung steht. Weiterhin weist der Berstkorken 3 eine Innenfläche 3B auf, die mit dem Innenraum des Hochspannungsgerätes 2 in Verbindung steht. Die Öffnung 5 in der Wand 4 ist dabei symmetrisch um eine Achse A der Öffnung 5 ausgerichtet.

Fig. 3 zeigt den vergrößerten Ausschnitt D aus Fig. 2. Der Berstkorken 3 sitzt in der Öffnung 5 der Wand 4. Auf der Innenfläche 3B des Berstkorkens ist mindestens ein Aufnahmeblock 7 vorgesehen, in dem ein Scherstift 8 sitzt beziehungsweise eingebracht ist. Der Scherstift 8 weist einen ersten Abschnitt 8A und einen zweiten Abschnitt 8B auf. Der erste Abschnitt 8A ragt zumindest teilweise in den Aufnahmeblock 7. Der zweite Abschnitt 8B des Scherstiftes 8 befindet sich unterhalb des umlaufenden Randes 9 der Öffnung 5 und/oder unmittelbar an dem umlaufenden Rand 9. Der Scherstift 8 weist außerdem bevorzugt eine Sollbruchstelle 8C auf.

Bei einem plötzlichen Druckanstieg im Inneren des Hochspannungsgerätes 2 (siehe Fig. 1) drückt beispielsweise das Transformatoröl gegen die Innenfläche 3B des Berstkorkens 3. Ab einem bestimmten Druckniveau wird der Scherstift 8 versagen und über den dann geöffneten Berstkorken 3 kann der Druck entweichen. Im Besonderen hat der Scherstift 8 eine Sollbruchstelle 8C ausgebildet, so dass bei Überschreiten eines festgelegten Werts der Scherstift 8 definiert immer an dieser Sollbruchstelle 8C bricht. Der Berstkorken 3 gibt die Öffnung 5 in der Wand 4 des Hochspannungsgerätes 2 frei und der Überdruck kann gezielt abgebaut werden.

Weiterhin weist der Berstkorken 3 einen umlaufenden Flanschabschnitt 13 auf, der bei einem in die Öffnung 5 eingesetzten Berstkorken 3 auf einen umlaufenden Ansatz 14 der Öffnung 5 aufliegt. Durch das Zusammenwirken von Flanschabschnitt 13 und Ansatz 14 wird die Öffnung 5 verschlossen.

Zwischen dem Flanschabschnitt 13 und dem umlaufenden Ansatz 14 kann mindestens eine Dichtung 15 und/oder eine Druckfeder (hier nicht dargestellt) angeordnet sein. Die Dichtung 15 wirkt mit dem umlaufenden Ansatz 14 der Öffnung 5 dichtend zusammen. Die Anordnung einer Druckfeder verhindert, dass der Berstkorken 3 zu locker auf der Öffnung 5 sitzt.

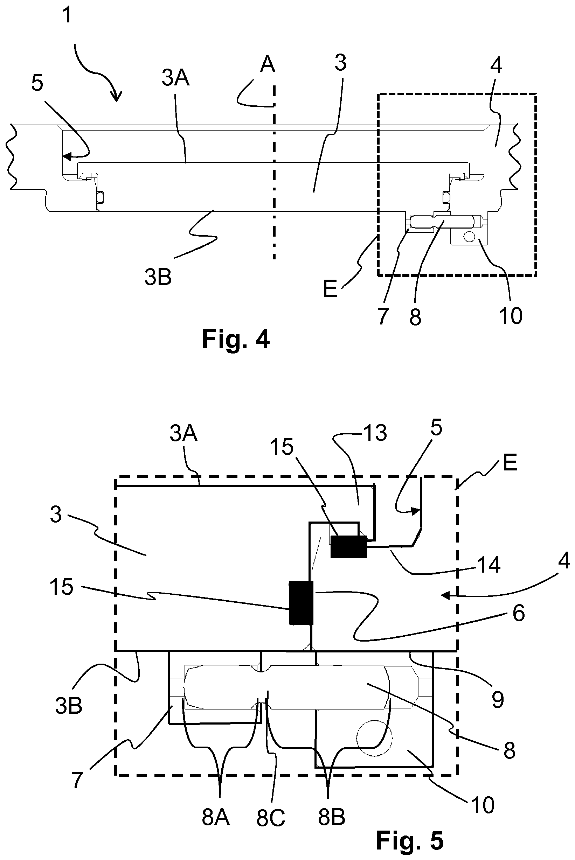

Fig. 4 zeigt in einer Schnittdarstellung gemäß der Linie B-B aus Fig. 1 eine zweite Ausführungsform der Bersteinrichtung 1. Hier ist dem Berstkorken 3 mindestens ein Aufnahmeblock 7 und ein dazu korrespondierender Abstützblock 10 zugeordnet. In den Aufnahmeblock 7 und den Abstützblock 10 ragt zur Sicherung der Scherstift 8.

Fig. 5 zeigt eine vergrößerte Darstellung des in Fig. 4 mit E gekennzeichneten Bereichs der Bersteinrichtung 1 aus Fig. 4. Der zweite Abschnitt 8B des Scherstiftes 8 ragt in den Abstützblock 10. Der erste Abschnitt 8A des Scherstiftes 8 ragt in den Aufnahmeblock 7. Der Aufnahmeblock 7 ist fest mit der Innenfläche 3B des Berstkorkens 3 verbunden. Der Abstützblock 10 ist am umlaufenden Rand 9 der Öffnung 5 derart angebracht, dass er dem Aufnahmeblock 7 unmittelbar gegenüber liegt.

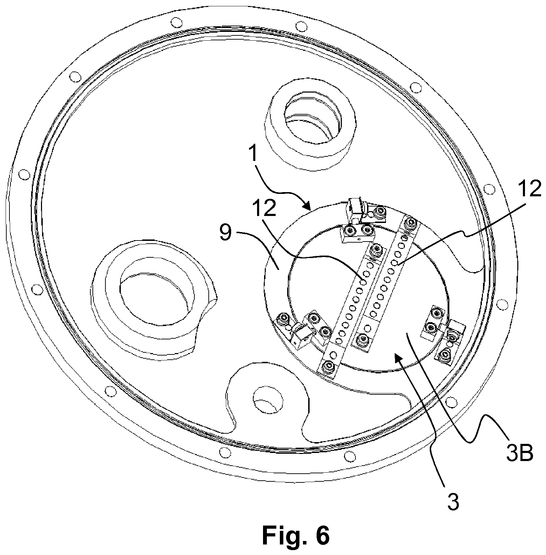

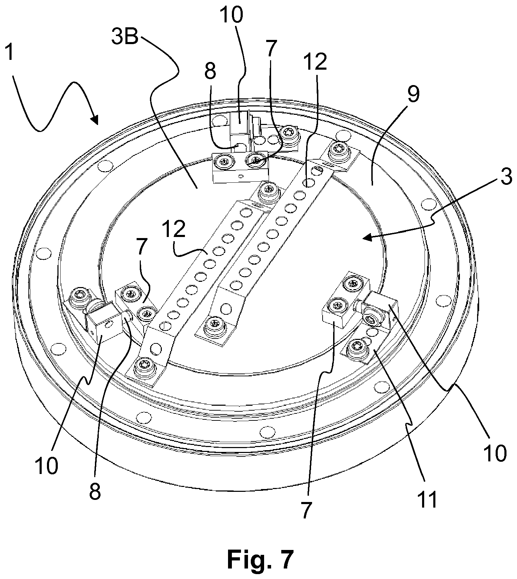

Fig. 6 und Fig. 7 zeigen eine Ausführungsform der erfindungsgemäßen Bersteinrichtung 1 mit einem Berstkorken 3 in perspektivischer Ansicht von unten, beispielsweise gemäß den Ausführungsformen nach Fig. 1 bis 5. Insbesondere ist die Innenfläche 3B des Berstkorkens 3 dargestellt. Jeder Abstützblock 10 (siehe Fig. 4) ist bevorzugt über ein Fangelement 11 am umlaufenden Rand 9 der Öffnung 5 befestigt. Das Fangelement 11 kann vorzugsweise als Lochband ausgebildet sein. Zusätzlich ist mindestens ein Sicherungselement 12 vorgesehen, welches die Innenfläche 3B des Berstkorkens 3 mit dem umlaufenden Rand 9 der Öffnung 5 verbindet. Auch das Sicherungselement 12 kann vorzugsweise als Lochband ausgebildet sein. Das Sicherungselement 12 ist beispielsweise, wie hier dargestellt, mit der Innenfläche 3B des Berstkorkens 3 und dem umlaufenden Rand 9 der Öffnung 5 verschraubt. Ebenso ist das Fangelement 11 mit dem umlaufenden Rand 9 der Öffnung 5 beispielsweise verschraubt. Der Aufnahmeblock 7 ist an der Innenfläche 3B des Berstkorkens 3 beispielsweise angeschraubt.

Bei einem Druckanstieg im Inneren des Hochspannungsgerätes 2 über eine vordefinierte Schwelle drückt beispielsweise das Transformatoröl gegen die Innenfläche 3B des Berstkorkens 3. Sollte der Druck einen durch den Scherstift 8, insbesondere dessen Sollbruchstelle 8C, festgelegten Wert überschreiten, bricht dieser und der Berstkorken 3 gibt die Öffnung 5 in der Wand 4 des Hochspannungsgerätes 2 frei. Da der zweite Abschnitt 8B des Scherstiftes 8 in den Abstützblock 10 ragt und dieser wiederum am umlaufenden Rand 9 der Öffnung 5 über das Fangelement 11 gesichert ist, wird verhindert, dass der zweite Abschnitt 8B des Scherstiftes 8 in das Innere des Hochspannungsgerätes 2 fällt. Ebenso ist der erste Abschnitt 8A des Scherstiftes 8 im Aufnahmeblock 7 festgelegt. Eine Kontamination des Hochspannungsgerätes 2 durch Teile eines zerbrochenen Scherstiftes 8 ist verhindert. Da der Berstkorken 3 über mindestens ein Sicherungselement 12 am umlaufenden Rand 9 der Öffnung 5 befestigt ist, wird verhindert, dass der Berstkorken 3 unkontrolliert in die Umgebung des Hochspannungsgerätes 2 geschleudert wird. Vorzugsweise ist der Berstkorken 3 über zwei Sicherungselemente 12 und drei Scherstifte 8 gesichert. Hier sind folglich drei Aufnahmeblöcke 7 mit den entsprechenden Abstützblöcken 10 vorgesehen.

Weiterhin ist denkbar, dass der Berstkorken 3 und die Aufnahmeblöcke 7 aus einem Gussteil gefertigt sind. Bei einer derartigen Ausführungsform wären die Aufnahmeblöcke 7 im Berstkorken 3 fest integriert.

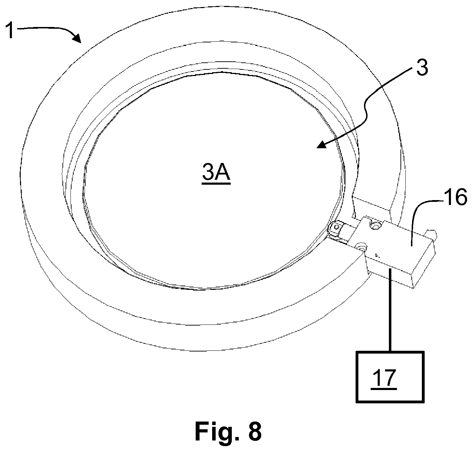

Fig. 8 zeigt eine erfindungsgemäße Bersteinrichtung 1 mit einer zusätzlichen Sensoreinrichtung 16. Die Sensoreinrichtung 16 detektiert ein Auslösen der Bersteinrichtung 1, das heißt das Öffnen des Bestkorkens 3, und meldet dies mittels eines digitalen Signals an eine zentrale Überwachungseinheit 17 des Hochspannungsgerätes 2. Dies kann beispielsweise über einen Mikroschalter realisiert werden, wobei dessen Betätigungshebel in unausgelöstem Zustand der Bersteinrichtung 1 gegen den Berstkorken 3 drückt und nach dem Auslösen entspannt wird. Weiterhin ist auch eine analoge Sensoreinrichtung 16 einsetzbar. Diese kann beispielsweise als Fahne (Semaphor) ausgebildet sein, die sich aufstellt, wenn der Berstkorken 3 nach oben gedrückt wird.

Die erfindungsgemäße Bersteinrichtung 1 ist somit kostengünstig, servicefreundlich, langlebig, gegen Witterungseinflüsse von außen unempfindlich, einfach montierbar und austauschbar und löst im Störfall zuverlässig aus.

Durch den Flanschabschnitt 13 in Verbindung mit dem umlaufenden Ansatz 14 ist der Berstkorken 3 vor allem vor äußeren Krafteinflüssen geschützt. Ein unbeabsichtigtes Abstützen oder Auftreten auf den Berstkorken 3 bei Servicearbeiten führt nun nicht mehr zu dessen Zerstörung, da der Berstkorken eine ausreichende Dicke und Stabilität besitzt, um diesen unbeabsichtigten Belastungen während eines Serviceintervalls zu widerstehen. Der Berstkorken 3 besteht vorzugsweise aus Metall, so dass auch die Witterung keinen bedeutenden Einfluss auf dessen Langlebigkeit hat.

Durch die zusätzlichen Auffangblöcke 10 können, wenn nötig, Teile der Scherstifte 8 aufgefangen werden. Dies ist vor allen beim Einsatz der Bersteinrichtung 1 in einem Laststufenschalter besonders vorteilhaft.

Dadurch, dass nur die Scherstifte 8 beim Auslösen der Bersteinrichtung 1 gebrochen werden, ist die Größe der freizugebenden Öffnung eindeutig über die Größe des Berstkorkens 3 definiert. Es wird somit ein kontrollierter Druckabbau sichergestellt.

Einen weiteren Vorteil bilden die Sicherungselemente 12, die verhindern, dass der Berstkorken 3 unkontrolliert im Umfeld des Hochspannungsgerätes 2 geschleudert wird und dadurch Schaden verursacht.

### Bezugszeichen

- 1: Bersteinrichtung
- 2: Hochspannungsgerät
- 3: Berstkorken
- 3A: Außenfläche
- 3B: Innenfläche
- 4: Wand
- 5: Öffnung
- 6: Rand
- 7: Aufnahmeblock
- 8: Scherstift
- 8A: erster Abschnitt
- 8B: zweiter Abschnitt
- 8C: Sollbruchstelle
- 9: umlaufender Rand
- 10: Abstützblock
- 11: Fangelement
- 12: Sicherungselement
- 13: Flanschabschnitt
- 14: umlaufender Ansatz
- 15: Dichtung
- 16: Sensoreinrichtung
- 17: Überwachungseinheit
- A: Achse der Öffnung

## Patentansprüche

1. Bersteinrichtung (1) für ein Hochspannungsgerät (2),
wobei die Bersteinrichtung (1) zumindest eine Abdeckung (3) aufweist, die bei bestimmungsgemäßer Montage eine in einer Wand (4) des Hochspannungsgerätes (2) ausgebildete Öffnung (5), die einen umlaufenden Rand (6) besitzt, verschließt, wobei die Bersteinrichtung (1) einen Berstkorken (3) als die Abdeckung umfasst, der eine Außenfläche (3A) und eine zum Hochspannungsgerät (2) hinweisende Innenfläche (3B) aufweist;
wobei die Innenfläche (3B) des Berstkorkens (3) mindestens einen Aufnahmeblock (7) umfasst; und
wobei ein Scherstift (8), als Teil der Bersteinrichtung, in dem mindestens einen Aufnahmeblock (7) sitzt, wobei der Scherstift (8) in einen ersten Abschnitt (8A) und einen zweiten Abschnitt (8B) unterteilt ist und der erste Abschnitt (8A) des Scherstifts (8) in den mindestens einen Aufnahmeblock (7) ragt und der zweite Abschnitt (8B) des Scherstifts (8) bei bestimmungsgemäßer Montage unterhalb des umlaufenden Randes (9) der Öffnung (5) angeordnet ist;
wobei der Scherstift (8) ab einem bestimmten Druckniveau im Hochspannungsgerät (2) bricht und
wobei der Berstkorken (3) einen umlaufenden Flanschabschnitt (13) aufweist, der bei bestimmungsgemäßer Montage auf einem umlaufenden Ansatz (14) der Öffnung (5) aufliegt.

2. Bersteinrichtung (1) nach Anspruch 1,
wobei jedem Aufnahmeblock (7) je ein Abstützblock (10) der Bersteinrichtung zugeordnet ist, der bei bestimmungsgemäßer Montage über ein Fangelement (11) am umlaufenden Rand (9) der Öffnung (5) befestigt ist, und
wobei der zweite Abschnitt (8B) des Scherstifts (8) in den Abstützblock (10) ragt.

3. Bersteinrichtung (1) nach einem der vorangehenden Ansprüche, wobei mindestens ein Sicherungselement (12) des Berstkorkens (3) mit der Innenfläche (3B) des Berstkorkens (3) und bei bestimmungsgemäßer Montage mit dem umlaufenden Rand (9) der Öffnung (5) verbunden ist.

4. Bersteinrichtung (1) nach Anspruch 1, wobei der Flanschabschnitt (13) des Berstkorkens (3) und eine in Richtung einer Achse (A) der Öffnung (5) ausgerichtete Wand (4) des Hochspannungsgerätes (2) bei bestimmungsgemäßer Montage je eine Dichtung (15) tragen, die mit dem umlaufenden Ansatz (14) der Öffnung (5) dichtend zusammenwirken.

5. Bersteinrichtung (1) nach einem der vorangehenden Ansprüche, wobei der Scherstift (8) eine Sollbruchstelle (8C) zwischen dem ersten Abschnitt (8A) und dem zweiten Abschnitt (8B) aufweist.

6. Bersteinrichtung (1) nach einem der vorangehenden Ansprüche, wobei die Innenfläche (3B) des Berstkorkens (3) drei Aufnahmeblöcke (7) vorgesehen hat,
wobei jedem Aufnahmeblock (7) ein Abstützblock (10) der Bersteinrichtung zugeordnet ist, so dass je ein Scherstift (8) in den Aufnahmeblock (7) und den Abstützblock (10) ragt.

7. Bersteinrichtung (1) nach Anspruch 6, wobei zwei Sicherungselemente (12) der Bersteinrichtung mit der Innenfläche (3B) des Berstkorkens (3) und bei bestimmungsgemäßer Montage mit dem umlaufenden Rand (9) der Öffnung (2) verbunden sind.

8. Bersteinrichtung (1) nach einem der vorangehenden Ansprüche, wobei der Berstkorken (3) und der mindestens eine Aufnahmeblock (7) einteilig ausgebildet sind.

9. Bersteinrichtung (1) nach einem der vorangehenden Ansprüche, wobei eine Sensoreinrichtung (16) als Teil der Bersteinrichtung vorgesehen ist, die nach dem Öffnen des Berstkorkens (3) ein analoges oder digitales Signal erzeugt.

10. Bersteinrichtung (1) nach Anspruch 9, wobei die Sensoreinrichtung (16) als Mikroschalter oder Fahne oder Semaphor ausgebildet ist.

11. Bersteinrichtung (1) nach einem der vorangehenden Ansprüche zur Verwendung in einem Laststufenschalter oder einem Hochspannungstransformator.

## Claims

1. Bursting device (1) for high-voltage apparatus (2), wherein the bursting device (1) comprises at least one cover (3) which closes an opening (5), which is formed in a wall (4) of the high-voltage apparatus (2) and has an encircling edge (6),
wherein
the bursting device (1) comprises a burst plug (3) as the cover, which has an outer surface (3A) and an inner surface (3B) which faces the high-voltage apparatus (2);
wherein the inner surface (3B) of the burst plug (3) has at least one mounting block (7); and
wherein a shear pin (8) as part of the bursting device is seated in the at least one mounting block (7), wherein the shear pin (8) is divided into a first section (8A) and a second section (8B) and the first section (8A) of the shear pin (8) projects into the at least one mounting block (7) and the second section (8B) of the shear pin (8) is arranged below the encircling edge (9) of the opening (5);
wherein the shear pin (8) breaks from a defined pressure level in the high-voltage apparatus (2) and wherein the burst plug (3) has an encircling flange section (13) which, when mounted as intended, rests on an encircling step (14) of the opening (5).

2. Bursting device (1) according to claim 1, wherein a respective support block (10) of the bursting device is associated with each mounting block (7) and is fastened at the encircling edge (9) of the opening (5) by way of a catch element (11) and wherein the second section (8B) of the shear pin (8) projects into the support block (10).

3. Bursting device (1) according to one of the preceding claims, wherein at least one securing element (12) of the burst plug (3) is connected with the inner surface (3B) of the burst plug (3) and, when mounted as intended, with the encircling edge (9) of the opening (5).

4. Bursting device (1) according to claim 1, wherein, when mounted as intended, the flange section (13) of the burst plug (3) and a wall (4), which is oriented in the direction of an axis (A) of the opening (5), of the high-voltage apparatus (2) each carry a respective seal (15) which sealingly co-operates with the encircling step (14) of the opening (5).

5. Bursting device (1) according to any one of the preceding claims, wherein the shear pin (8) has a frangible location (8C) between the first section (8A) and the second section (8B).

6. Bursting device (1) according to any one of the preceding claims, wherein the inner surface (3B) of the burst plug (4) is provided with three mounting blocks (7) and wherein a support block (10) of the bursting device is associated with each mounting block (7) so that a respective shear pin (8) projects into the mounting block (7) and the support block (10).

7. Bursting device (1) according to claim 6, wherein two securing elements (12) of the bursting device are connected with the inner surface (3B) of the burst plug (3) and, when mounted as intended, with the encircling edge (9) of the opening (2).

8. Bursting device (1) according to any one of the preceding claims, wherein the burst plug (3) and the at least one mounting block (7) are of integral construction.

9. Bursting device (1) according to any one of the preceding claims, wherein a sensor device (16) which generates an analog or digital signal after opening of the burst plug (3) is provided as part of the bursting device.

10. Bursting device (1) according to claim 9, wherein the sensor device (16) is constructed as a microswitch or vane or semaphore.

11. Bursting device (1) according to any one of the preceding claims for use in an on-load tap changer or a high-voltage transformer.

## Revendications

1. Dispositif de rupture par éclatement (1) destiné à un appareil haute tension (2), ce dispositif de rupture par éclatement (1) comprenant au moins un élément de recouvrement (3) qui, lors d'un montage conforme ferme une ouverture (5) formée dans une paroi (4) de l'appareil haute tension (2) qui comporte un bord périphérique (6),
le dispositif de rupture par éclatement (1) comprenant en tant qu'élément de recouvrement un bouchon de rupture (3) qui comporte une surface externe (3A) et une surface interne (3B) tournée vers l'appareil haute tension (2),
la surface interne (3B) du bouchon de rupture (3) comprenant au moins un bloc de réception (7) et une broche de cisaillement (8) constituant une partie du dispositif de rupture par éclatement étant positionnée dans le bloc de réception (7), la broche de cisaillement (8) étant subdivisée en un premier segment (8A) et en un second segment (8B) le premier segment (8A) de la broche de cisaillement (8) pénétrant dans le bloc de réception (7) tandis que le second segment (8B) de la broche de cisaillement (8) est situé lors d'un montage conforme au-dessous du bord périphérique (9) de l'ouverture (5),
la broche de cisaillement (8) se rompant à partir d'un niveau de pression déterminé dans l'appareil haute pression (2), et
le bouchon de rupture (3) comprenant un segment de bride périphérique (13) qui, lors d'un montage conforme s'applique sur la base périphérique (14) de l'ouverture (5).

2. Dispositif de rupture par éclatement (1) conforme à la revendication 1,
dans lequel à chaque bloc de réception (7) est associé un bloc d'appui (10) du dispositif de rupture par éclatement qui, lors d'un montage conforme est fixé sur le bord périphérique (9) de l'ouverture (5) par un élément d'arrêt (11), et le second segment (8B) de la broche de cisaillement (8) pénètre dans le bloc d'appui (10).

3. Dispositif de rupture par éclatement (1) conforme à l'une des revendications précédentes,
dans lequel au moins un élément de protection (12) du bouchon de rupture (3) est relié à la surface interne (3B) de ce bouchon (3) et en cas de montage correct avec le bord périphérique (9) de l'ouverture (5).

4. Dispositif de rupture par éclatement (1) conforme à la revendication 1,
dans lequel le segment de bride (13) du bouchon de rupture (3) et une paroi (4) de l'appareil haute tension (2) orientée en direction de l'axe (A) de l'ouverture (5) portent respectivement, lors d'un montage conforme un joint d'étanchéité (15) qui coopère de façon à garantir l'étanchéité avec la base périphérique (14) de l'ouverture (5).

5. Dispositif de rupture par éclatement (1) conforme à l'une des revendications précédentes,
dans lequel la broche de cisaillement (8) comporte un emplacement de rupture de consigne (8C) entre le premier segment (8A) et le second segment (8B).

6. Dispositif de rupture par éclatement (1) conforme à l'une des revendications précédentes,
dans lequel la surface interne (3B) du bouchon de rupture (3) comporte trois blocs de réception (7),
à chaque bloc de réception (7) est associé un bloc d'appui (10) du dispositif de rupture par éclatement de sorte qu'une broche de cisaillement respective (8) pénètre dans le bloc de réception (7) et le bloc d'appui (10).

7. Dispositif de rupture par éclatement (1) conforme à la revendication 6,
dans lequel deux éléments de protection (12) du dispositif de rupture par éclatement sont reliés la surface interne (3B) du bouchon de rupture par éclatement (3) et lors d'un montage conforme avec le bord périphérique (9) de l'ouverture (2).

8. Dispositif de rupture par éclatement (1) conforme à l'une des revendications précédentes,
dans lequel le bouchon de rupture (3) et le bloc de réception (7) sont réalisés en une seule partie.

9. Dispositif de rupture par éclatement (1) conforme à l'une des revendications précédentes,
dans lequel il est prévu un dispositif de capteur (16) faisant partie de ce dispositif de rupture par éclatement qui, après l'ouverture du bouchon de rupture (3) produit un signal analogique ou numérique.

10. Dispositif de rupture par éclatement (1) conforme à la revendication 9,
dans lequel le dispositif de capteur (16) est réalisé sous la forme d'un microcommutateur ou d'un drapeau ou d'un sémaphore.

11. Dispositif de rupture par éclatement (1) conforme à l'une des revendications précédentes,
destiné à être utilisé dans un commutateur de prise en charge ou un transformateur haute tension.
